# EUROPEAN PATENT SPECIFICATION

(11) **EP 2 894 215 B1**
(45) Date of publication and mention of the grant of the patent: **14.11.2018**
(21) Application number: 13835549.0
(22) Date of filing: 03.09.2013
(51) Int. Cl.: C11C 3/00, A23D 9/007, A23D 9/02, C11B 3/10, C11C 1/04, C11C 1/08, C11C 3/02, A23D 7/01, A23D 9/00

(54) **FAT COMPOSITION**
FETTZUSAMMENSETZUNG
COMPOSITION DE GRAISSE

(30) Priority: 04.09.2012 JP 2012193792
(43) Date of publication of application: 15.07.2015
(73) Proprietor: Kao Corporation, Chuo-ku Tokyo 103-8210 (JP)
(72) Inventor: HOMMA, Rika, Tokyo 131-8501 (JP); SAITO, Katsuyoshi, Tokyo 131-8501 (JP)
(74) Representative: Hoffmann Eitle
(86) International application number: PCT/JP2013/073672
(87) International publication number: WO 2014/038545

(56) References cited:
- EP-A2- 1 135 991
- WO-A1-2005/104865
- WO-A1-2008/018147
- WO-A1-2011/074575
- CA-A1- 2 784 400
- JP-A- 2004 168 995
- JP-A- 2004 168 995
- JP-A- 2008 061 577
- JP-A- 2008 061 577
- JP-A- 2010 090 383
- US-B2- 8 003 144

## Description

### Field of the Invention

The present invention relates to a fat or oil composition having diacylglycerol at a high content.

### Background of the Invention

A fat or oil is essential as a nutrient and energy source for a body (primary function), and moreover, is important for providing the so-called sensory function (secondary function), which satisfies preference such as a taste and an aroma. In addition, a fat or oil containing diacylglycerols at a high concentration is known to have a physiological action (tertiary function) such as a body fat-burning action.

An untreated fat or oil obtained by squeezing seeds, germs, pulp, or the like of a plant contains fatty acids, monoacylglycerols, odor components, and the like in addition to triacylglycerols. Further, when the a fat or oil is processed, trace components are produced through a heating step such as a transesterification reaction, an esterification reaction, or hydrogenation treatment, resulting in deterioration of a taste and flavor. It is necessary to improve the taste and flavor by removing the trace components in order to use the fat or oil as an edible oil. The so-called deodorization treatment involving bringing the fat or oil into contact with water vapor under reduced pressure at high temperature is generally performed as means for removing the trace components (Patent Document 1).

Further, in order to produce a diacylglycerol-rich fat or oil having a good taste and flavor, an organic acid is added to a fat or oil rich in diacylglycerols, and decoloration treatment is carried out with a porous adsorbent, followed by deodorization treatment (Patent Document 2).

### Citation List

### Patent Document

[Patent Document 1] JP-A-59-68398
[Patent Document 2] JP-A-4-261497

JP 2004-168995 is directed to an oil and fat composition comprising 100 parts of an oil and fat containing 60-100 wt.% diglycerides with 80-100 wt.% unsaturated fatty acids, 0.001-1 parts of carboxylic acids selected from a certain group, 0.001-5 parts of an antioxidant and 0.05-4.7 parts of phytosterol.

JP 2008-061577 describes an oil and fat composition containing an oil and fat, which contains 65 mass% diacylglycerol or higher, having 80 mass% unsaturated fatty acid or higher, and 80-95 mass% oleic acid in the constituent fatty acids

CA 2784400 relates to an oil or fat composition which has an MCPD-FS content (ppm) measured by Deutche Gesellschaft für Fettwissenschaft (DGF) standard method C-III 18(09) of 13 ppm or less and a diacylglycerol content of 15 mass% or more and has been deodrorized.

### Summary of the Invention

The present invention provides a fat or oil composition, comprising:
20% by mass or more of diacylglycerols and 10% by mass or less of monoacylglycerols with respect to a total content of triacylglycerols, diacylglycerols, monoacylglycerols and free fatty acids in the fat or oil composition; and
2% by mass or less of fatty acid esters having a total carbon atom of 43 or more and less than 51 in the fat or oil composition,
wherein the fat or oil composition is obtainable by a production method comprising the following steps (1), (2), (3), and (4):
   (1) hydrolyzing a raw material fat or oil selected from one or more of sunflower oil, rapeseed oil and linseed oil, with an oil and fat hydrolase;
   (2) cooling the hydrolyzed reaction product to precipitate a solid, followed by removing the solid by fractionation, to thereby prepare a fractionated fatty acid;
   (3) subjecting the resulting fractionated fatty acid and glycerin to an esterification reaction to prepare a fat or oil composition comprising 20% by mass or more of diacylglycerols with respect to a total content of triacylglycerols, diacylglycerols, monoacylglycerols and free fatty acids in the fat or oil composition; and
   (4) bringing the resulting fat or oil composition into contact with an adsorbent.

Also, the present invention provides a method for producing a fat or oil composition, comprising: 20% by mass or more of diacylglycerols and 10% by mass or less of monoacylglycerols with respect to a total content of triacylglycerols, diacylglycerols, monoacylglycerols and free fatty acids in the fat or oil composition; and 2% by mass or less of fatty acid esters having a total carbon atom of 43 or more and less than 51 in the fat or oil composition, the production method comprising the following steps (1), (2), (3), and (4):
(1) hydrolyzing a raw material fat or oil selected from one or more of sunflower oil, rapeseed oil and linseed oil with an oil and fat hydrolase;
(2) cooling the hydrolyzed reaction product to precipitate a solid, followed by removing the solid by fractionation, to thereby prepare a fractionated fatty acid;
(3) subjecting the resulting fractionated fatty acid and glycerin to an esterification reaction to prepare a fat or oil composition comprising 20% by mass or more of diacylglycerols with respect to a total content of triacylglycerols, diacylglycerols, monoacylglycerols and free fatty acids in the fat or oil composition; and
(4) bringing the resulting fat or oil composition into contact with an adsorbent.

### Detailed Description of the Invention

However, it found that if a diacylglycerol-rich fat or oil composition is subjected to a conventional refining treatment, it results in deteriorating taste and flavor in some cases.

Therefore, the present invention relates to providing a fat or oil composition that has a good taste and flavor, comprising a diacylglycerol-rich fat or oil subjected to refining treatment.

The inventors made various studies on a cause of a change in the taste and flavor of a diacylglycerol-rich fat or oil subjected to a refining treatment. As a result, the inventors found that the content of fatty acid esters having a total carbon atom of 43 or more and less than 51 increases in any one of the steps of hydrolysis of a raw material fat or oil, esterification of a fatty acid obtained by hydrolysis and glycerin, and subsequent refining treatment, and it causes deterioration of the taste and flavor of the resulting fat or oil composition. Further, the inventors found that if the content of the fatty acid esters is suppressed to 2% by mass or less, a diacylglycerol-rich fat or oil composition having a good taste and flavor can be obtained.

The diacylglycerol-rich fat or oil composition according to the present invention has a good taste and flavor, and can be applied widely as a fat or oil having a health function.

In the fat or oil composition according to the present invention, the ratio of diacylglycerols with respect to the total content of triacylglycerols, diacylglycerols, monoacylglycerols and free fatty acids in the fat or oil composition is preferably 20% by mass (hereinafter simply referred to as "%") or more, more preferably 25% or more, more preferably 30% or more, more preferably 40% or more, more preferably 50% or more, even more preferably 70% or more, from the viewpoint that the fat or oil composition has a good taste and flavor. The upper limit of the ratio of diacylglycerols is not particularly defined, and is preferably 99% or less, more preferably 98% or less, even more preferably 97% or less, from the viewpoint of industrial productivity. Specifically, the ratio of diacylglycerols with respect to the total content of triacylglycerols, diacylglycerols, monoacylglycerols and free fatty acids in the fat or oil composition is preferably from 20 to 99%, more preferably from 25 to 99%, more preferably from 30 to 99%, more preferably from 40 to 99%, more preferably from 50 to 98%, even more preferably from 70 to 97%. Note that, in the present invention, the term"fat or oil" refers to a fat or oil containing one or more of glycerols among triacylglycerols, diacylglycerols and monoacylglycerols.

In the fat or oil composition according to the present invention, the ratio of monoacylglycerols with respect to the total content of triacylglycerols, diacylglycerols, monoacylglycerols and free fatty acids in the fat or oil composition is preferably 10% or less, more preferably 5% or less, more preferably 2.5% or less, even more preferably 2% or less, from the viewpoints of, for example, a taste and flavor, an appearance, and the industrial productivity of a fat or oil. The ratio of monoacylglycerols with respect to the total content of triacylglycerols, diacylglycerols, monoacylglycerols and free fatty acids in the fat or oil composition is preferably 0% or more, more preferably 0.1% or more, from the viewpoints of, for example, a taste and flavor, an appearance, and the industrial productivity of a fat or oil. The ratio of monoacylglycerols with respect to the total content of triacylglycerols, diacylglycerols, monoacylglycerols and free fatty acids in the fat or oil composition is preferably from 0 to 10%, more preferably from 0 to 5%, more preferably from 0 to 2.5%, even more preferably from 0.1 to 2%.

In the fat or oil composition according to the present invention, it is important that the content of fatty acid esters having a total carbon atom of 43 or more and less than 51 in the fat or oil composition is 2% or less from the viewpoint of a taste and flavor. The fatty acid esters having a total carbon atom of 43 or more and less than 51 are considered to be produced as by-products in any one of the steps of production and refinement of the diacylglycerol-rich fat or oil composition. The content of the fatty acid esters is 2% or less, preferably 1.9% or less, more preferably 1.8% or less, from the viewpoint of a taste and flavor. The fat or oil composition is even more preferably substantially free of the fatty acid esters. The lower limit of the content of the fatty acid esters is preferably 0, and from the viewpoint of the industrial productivity, is preferably 0.1% or more, more preferably 0.3% or more, even more preferably 0.5% or more.

Further, the content of the fatty acid esters is preferably from 0 to 1.9%, more preferably from 0.1 to 1.9%, more preferably from 0.3 to 1.9%, more preferably from 0.5 to 1.9%, even more preferably from 0.5 to 1.8%.

The fatty acid esters are esters of fatty acids and alcohols, and include diacylglycerols, triacylglycerols, fatty acid esters of phytosterols, and ester waxes of higher alcohols and fatty acid esters each having a total carbon atom of 43 or more and less than 51.

The fatty acid esters can be detected and quantified by gas chromatography (GLC) . The content of the fatty acid esters can be reduced to 2% or less by adopting a production method involving fractionation to be described below as well as by separation using a column, molecular distillation, or the like.

The constituent fatty acids of a fat or oil in the fat or oil composition according to the present invention may be any of saturated fatty acids and unsaturated fatty acids. The content of the saturated fatty acids in the constituent fatty acids of the fat or oil is preferably 8% or less, more preferably 7.5% or less, more preferably 7% or less, even more preferably 6.5% or less, from the viewpoint of a taste and flavor. The lower limit of the content of the saturated fatty acids is preferably 0, and the content of the saturated fatty acids is usually 1% or more. Further, the content of the saturated fatty acids in the constituent fatty acids of the fat or oil is preferably from 0 to 7.5%, more preferably from 0 to 7%, even more preferably from 1 to 6.5%.

The number of carbon atoms in the unsaturated fatty acids is preferably from 14 to 24, more preferably from 16 to 22, from the viewpoint of physiological effects. The saturated fatty acids have preferably from 14 to 24, more preferably from 16 to 22 carbon atoms. Of those, palmitic acid and stearic acid are preferred.

The constituent fatty acids of the diacylglycerols in the fat or oil composition according to the present invention may be any of saturated fatty acids and unsaturated fatty acids. The content of the saturated fatty acids in the constituent fatty acids of the diacylglycerols is preferably 8% or less, more preferably 7.5% or less, more preferably 7% or less, even more preferably 6.5% or less, from the viewpoint of a taste and flavor. Further, the lower limit of the content of the saturated fatty acids is preferably 0, and the content of the saturated fatty acids is usually 1% or more. Further, the content of the saturated fatty acids in the constituent fatty acid of the diacylglycerols is preferably from 0 to 7.5%, more preferably from 0 to 7%, even more preferably from 1 to 6.5%.

The number of carbon atoms in the unsaturated fatty acids is preferably from 14 to 24, more preferably from 16 to 22, from the viewpoint of physiological effects. The saturated fatty acids have preferably from 14 to 24, more preferably from 16 to 22 carbon atoms. Of those, palmitic acid and stearic acid are preferred.

Naturally-occurring unsaturated fatty acids having double bonds, which generally have cis form, may undergo isomerization to a trans form owing to a thermal history. In the constituent fatty acid of the diacylglycerols in the fat or oil composition according to the present invention, the content of trans oleic acid, that is, elaidic acid, is preferably 1% or less, more preferably 0.5% or less, even more preferably 0.3% or less, from the viewpoint of physiological effects. The lower limit of the content of elaidic acid is preferably 0.

Further, if a ratio of fatty acids having two double bonds including a trans double bond and having 18 carbon atoms (referred to as "trans linoleic acid") to fatty acids having two doublebonds and having 18 carbonatoms (referred to as "total linoleic acid") is expressed in terms of percentage, the ratio (referred to as "content (%) of trans isomer") usually tends to increase in proportion to the degree of refining treatment.

The content of trans isomers in the constituent fatty acids of a fat or oil in the fat or oil composition is preferably 4% or less, more preferably 3% or less, even more preferably 2.5% or less. The lower limit of the content of trans isomers is preferably 0.

Further, the content of trans isomers in the constituent fatty acids of diacylglycerols in the fat or oil composition is preferably 4% or less, more preferably 3% or less, even more preferably 2.5% or less. The lower limit of the content of trans isomers is preferably 0.

The content of α-linolenic acid (C18:3) in the constituent fatty acids of a fat or oil in the fat or oil composition according to the present invention is preferably 10% or less, more preferably 8% or less, more preferably 5% or less, more preferably 3% or less, even more preferably 2% or less, from the viewpoints of a taste and flavor and oxidative stability. Further, the lower limit of the content of α-linolenic acid is preferably 0, and the content of α-linolenic acid is usually 0.1% or more. Further, the content of α-linolenic acid (C18:3) in the constituent fatty acids of a fat or oil is preferably from 0 to 8%, more preferably from 0 to 5%, more preferably from 0 to 3%, more preferably from 0 to 2%, even more preferably from 0.1 to 2%.

Further, the content of α-linolenic acid (C18:3) in the constituent fatty acids of the diacylglycerols in the fat or oil composition according to the present invention is preferably 10% or less, more preferably 8% or less, more preferably 5% or less, more preferably 3% or less, even more preferably 2% or less, from the viewpoints of a taste and flavor and oxidative stability. Further, the lower limit of the content of α-linolenic acid is preferably 0, and the content of α-linolenic acid is usually 0.1% or more. Further, the content of α-linolenic acid (C18:3) in the constituent fatty acids of the diacylglycerols is preferably from 0 to 8%, more preferably from 0 to 5%, more preferably from 0 to 3%, more preferably from 0 to 2%, even more preferably from 0.1 to 2%.

Further, the constituent fatty acids of the monoacylglycerols are preferably the same constituent fatty acids as those of the diacylglycerols, from the viewpoints of physiological effects and the industrial productivity of a fat or oil.

The content of linoleic acid (C18:2) in the constituent fatty acids of a fat or oil in the fat or oil composition according to the present invention is preferably 20% or more, more preferably 25% or more, more preferably 30% or more, more preferably 40% or more, more preferably 45% or more, even more preferably 50% or more, from the viewpoints of a taste and flavor and oxidative stability. Further, the upper limit of the content of linoleic acid is preferably 60% or less, more preferably 55% or less. Further, the content of linoleic acid (C18:2) in the constituent fatty acids of a fat or oil is preferably from 20 to 60%, more preferably from 25 to 60%, more preferably from 30 to 60%, more preferably from 40 to 60%, more preferably from 45 to 55%, even more preferably from 50 to 55%.

Further, the content of linoleic acid (C18:2) in the constituent fatty acids of the diacylglycerols in the fat or oil composition according to the present invention is preferably 20% or more, more preferably 25% or more, more preferably 30% or more, more preferably 40% or more, more preferably 45% or more, even more preferably 50% or more, from the viewpoints of a taste and flavor and oxidative stability. Further, the upper limit of the content of linoleic acid is preferably 60% or less, more preferably 55% or less. Further, the content of linoleic acid (C18:2) in the constituent fatty acids of the diacylglycerols is preferably from 20 to 60%, more preferably from 25 to 60%, more preferably from 30 to 60%, more preferably from 40 to 60%, more preferably from 45 to 55%, even more preferably from 50 to 55%.

Further, the constituent fatty acids of the monoacylglycerols are preferably the same constituent fatty acids as those of the diacylglycerols, from the viewpoints of physiological effects and the industrial productivity of a fat or oil.

In the fat or oil composition according to the present invention, the ratio of triacylglycerols with respect to the total content of triacylglycerols, diacylglycerols, monoacylglycerols and free fatty acids in the fat or oil composition is preferably from 4.9 to 69.9%, more preferably from 6.9 to 39.9%, even more preferably from 6.9 to 29.9%, from the viewpoints of physiological effects, the industrial productivity of a fat or oil, and an appearance. Further, the constituent fatty acids of the triacylglycerols are preferably the same constituent fatty acids as those of the diacylglycerols, from the viewpoints of physiological effects and the industrial productivity of a fat or oil.

Further, in the fat or oil composition according to the present invention, the ratio of free fatty acids (salts) with respect to the total content of triacylglycerols, diacylglycerols, monoacylglycerols and free fatty acids in the fat or oil composition is preferably 5% or less, more preferably from 0 to 2%, even more preferably from 0 to 1%, from the viewpoints of a taste and flavor and the industrial productivity of a fat or oil.

In the fat or oil composition according to the present invention, the content of the total content of triacylglycerols, diacylglycerols, monoacylglycerols and free fatty acids in the fat or oil composition is preferably 95% or more, more preferably 98% or more, even more preferably 99% or more, from the viewpoints of a taste and flavor and use as a fat or oil. Further, the content of the total content of triacylglycerols, diacylglycerols, monoacylglycerols and free fatty acids in the fat or oil composition is preferably 99.8% or less, more preferably 99.75% or less, even more preferably 99.7% or less, from the viewpoint of industrial production of a fat or oil.

Further, in the fat or oil composition according to the present invention, the content of MCPD-FS, which is measured by a Deutsche Gesellschaft für Fettwissenschaft (DGF) standard method C-III 18(09) (DGF Standard Methods 2009 (14. Supplement), C-III 18(09), "Ester-bound 3-chloropropane-1, 2-diol (3-MCPD esters) and glycidol (glycidyl esters)"), is preferably 3 ppm or less, more preferably 2 ppm or less, even more preferably 1 ppm or less, from the viewpoint of improving the heaviness of a taste and flavor.

The DGF standard method C-III 18(09) is a microanalytical method for a fat or oil using a gas chromatograph-mass spectrometer (GC-MS) and is a measurement method for 3-chloropropane-1,2-diol and esters thereof (MCPD esters), as well as glycidol and esters thereof. The total content of these four components is measured as an analytical value of MCPD-FS.

The present invention uses the method of Option A described in the standard method 7.1 ("7.1 Option A: Determination of the sum of ester-bound 3-MCPD and glycidol"). The details of the measurement method are described in Examples.

The fat or oil composition according to the present invention is obtained by carrying out an esterification reaction between a fatty acid produced by hydrolysis of a fat or oil and glycerin, or a glycerolysis reaction between a fat or oil and glycerin, and then subjecting the resulting product to refining treatment. The fat or oil composition is produced by a method involving the following steps (1), (2), (3), and (4) from the viewpoint of efficient production of a fat or oil composition comprising fatty acid esters having a total carbon atom of 43 or more and less than 51 at a low content:
(1) hydrolyzing a raw material fat or oil with an oil and fat hydrolase;
(2) cooling the hydrolyzed reaction product to precipitate a solid, followed by removing the solid by fractionation, to thereby prepare a fractionated fatty acid;
(3) subjecting the resulting fractionated fatty acid and glycerin to an esterification reaction to prepare a fat or oil composition comprising 20% by mass or more of diacylglycerols with respect to a total content of triacylglycerols, diacylglycerols, monoacylglycerols and free fatty acids in the fat or oil composition; and
(4) bringing the resulting fat or oil composition into contact with an adsorbent.

The raw material fat or oil used for production of the fat or oil composition according to the present invention is one or more selected from rapeseed oil, sunflower oil, and linseed oil. In particular, sunflower oil is preferred because it contains α-linolenic acid at a low content, and results in reducing the content of trans unsaturated fatty acids after hydrolysis. Further, the fat or oil is preferably produced using, as all or part of raw materials, a fat or oil not subjected to deodorization in refining treatment for the fat or oil, i.e., an undeodorized fat or oil because the content of trans unsaturated fatty acids after hydrolysis can be reduced.

The hydrolysis of the raw material fat or oil in the step (1) is preferably carried out by using an oil and fat hydrolase under a mild condition from the viewpoint of a taste and flavor.

The oil and fat hydrolase to be used in a method of decomposing a fat or oil with an enzyme is preferably a lipase. The lipase to be used may be a commercially available microorganism-derived lipase as well as an animal-derived or plant-derived lipase. An example of the microorganism-derived lipase include a lipase originated from, for example, the genus of Rhizopus, the genus of Aspergillus, the genus of Mucor, the genus of Rhizomucor, the genus of Pseudomonas, the genus of Geotrichum, the genus of Penicillium, and the genus of Candida.

Further, an immobilized oil and fat hydrolase obtained by immobilizing an oil and fat hydrolase onto a carrier is preferably used from the viewpoint of effective utilization of enzymatic activity. Further, the immobilized enzyme is preferably used from the viewpoint of easy separation of a hydrolysate from an enzyme.

The hydrolysis activity of the oil and fat hydrolase falls within a range of preferably 20 U/g or more, more preferably from 100 to 10, 000 U/g, even more preferably from 500 to 5, 000 U/g. The "1 U" of an enzyme used herein represents a decomposition ability of an enzyme capable of generating 1 µmol of a free fatty acid per minute when a mixed solution of a fat or oil and water at a mass ratio of 100:25 is hydrolyzed while being mixed by stirring at 40°C for 30 minutes.

The oil and fat hydrolase may be used in any state in which the hydrolase is filled in a packed tower or in a stirring bath. The oil and fat hydrolase is preferably used in a state in which the hydrolase is filled in a packed tower from the viewpoint of suppressing fracture of the immobilized enzyme.

The amount (dry mass) of an enzyme to be used for a hydrolysis reaction of a fat or oil can be appropriately determined in consideration of the activity of the enzyme, and is, with respect to 100 parts by mass (hereinafter simply referred to as "parts") of a fat or oil to be decomposed, preferably from 0.01 to 30 parts, more preferably from 0.1 to 20 parts, even more preferably from 1 to 10 parts. Further, the amount of water is preferably from 10 to 200 parts, more preferably from 20 to 100 parts, even more preferably from 30 to 80 parts with respect to 100 parts by mass of a fat or oil to be decomposed. The water used may be any of distilled water, ion-exchanged water, deaerated water, tap water, well water, and the like. Another water-soluble component such as glycerin may be mixed therein. In order to maintain stability of the enzyme, a buffer (pH 3 to 9) may be used, if necessary.

The reaction temperature is preferably from 0 to 70°C, more preferably from 20 to 50°C, which is a temperature at which the activity of an enzyme is induced more effectively and no crystals are formed from free fatty acids formed by decomposition. Further, the reaction is preferably carried out in the presence of an inert gas such as nitrogen from the viewpoint of suppressing deterioration of a decomposed fatty acid composition due to oxidation, so that the contact with an air is avoided as much as possible.

In the present invention, the fat or oil may be hydrolyzed by a batch method, a continuous method, or a semi-continuous method. The fat or oil and water may be supplied to an apparatus in a parallel flow manner or in a counter flow manner. As the fat or oil and water to be supplied to an apparatus for a hydrolysis reaction, a fat or oil and water previously subjected to deaeration or deoxidation, if necessary, are preferably used from the viewpoint of suppressing oxidation of the fat or oil.

The step (2) of cooling the hydrolyzed reaction product to precipitate a solid, followed by removing the solid by fractionation, to thereby prepare a fractionated fatty acid is important from the viewpoints of producing a diacylglycerol-rich fat or oil composition having a good taste and flavor and preventing an increase in the fatty acid esters.

The cooling temperature for solid precipitation is appropriately selected depending on the kind of a fatty acid raw material, and is preferably from -5 to 15°C, more preferably from 0 to 15°C, more preferably from 2 to 13°C, more preferably from 3 to 11°C, even more preferably from 3 to 9°C. The cooling rate until the temperature reaches the cooling temperature range is preferably 10°C/min or less, more preferably from 0.1 to 8°C/min, even more preferably from 0.3 to 5°C/min, from the viewpoints of additionally reducing the amount of saturated fatty acids in a fatty acid composition of interest and improving the productivity.

As means for removing the precipitated solid, there are given, for example, static separation, filtration, centrifugation, and a method involving mixing an aqueous solution of wetting agent in a fatty acid and separating a solid. When the aqueous solution of wetting agent, which is an aqueous solution containing a surfactant and an inorganic electrolyte, is mixed in a fatty acid in which a solid has been precipitated, the solid can be easily separated from an oil phase of a liquid including a fatty acid composition, because the property of the saturated fatty acid crystal precipitated is changed from hydrophobic property to hydrophilic property to move the crystal from the oil phase to the aqueous phase and disperse it in the aqueous phase.

The concentration of saturated fatty acids in the fractionated fatty acids after the fractionation is preferably 8% or less, more preferably 7.5% or less, even more preferably 7% or less. The lower limit of the concentration of saturated fatty acids is preferably 0, and is usually 1% or more.

The esterification reaction between a fatty acid and glycerin in the step (3) is preferably carried out in the presence of a lipase. The lipase to be used is preferably an immobilized lipase obtained by immobilizing a lipase to a carrier for immobilization.

The ratio of diacylglycerols with respect to the total content of triacylglycerols, diacylglycerols, monoacylglycerols and free fatty acids in the resulting fat or oil composition is preferably 20% or more, more preferably 25% or more, more preferably 30% or more, more preferably 40% or more, more preferably 50% or more, even more preferably 70% or more, from the viewpoint of a good taste and flavor. The upper limit is not particularly defined, and is preferably 99% or less, more preferably 98% or less, even more preferably 97% or less, from the viewpoint of industrial productivity. Specifically, the ratio of diacylglycerols with respect to the total content of triacylglycerols, diacylglycerols, monoacylglycerols and free fatty acids in the fat or oil composition is preferably from 20 to 99%, more preferably from 25 to 99%, more preferably from 30 to 99%, more preferably from 40 to 99%, more preferably from 50 to 98%, even more preferably from 70 to 97%.

As for the ratio of the raw materials to be fed in the esterification reaction, the ratio R of the molar number of fatty acid groups to the molar number of glycerin groups (R=fatty acid and the like (mol)/glycerin (mol)) is preferably from 0.5 to 5.0, more preferably from 1.0 to 4.0, more preferably from 1.2 to 3.0, even more preferably from 1.5 to 2.5, from the viewpoint of achieving the optimum composition of the oil for the reaction (from the viewpoint of suppressing, in the oil for the reaction, the residual amounts of fatty acids or the like and glycerin, and the amounts of monoacylglycerols or triacylglycerols generated to reduce a burden of distillation and to increase the content of diacylglycerols, resulting in high production efficiency).

A method of subjecting glycerin and a fatty acid or the like to a reaction using an immobilized lipase is not particularly limited, and it is sufficient to involve bringing the immobilized lipase into contact with raw materials (glycerin, a fatty acid and the like) . As contact means, there are given, for example, immersion, stirring, and methods involving passing a liquid through a column filled with the immobilized lipase with a pump, or the like. In the case of stirring, the rate is preferably from 10 to 1,000 r/min, more preferably from 50 to 700 r/min, even more preferably from 100 to 600 r/min, from the viewpoint of production efficiency and the viewpoint of suppressing fracture of the immobilized lipase.

The amount (dry mass) of the immobilized lipase to be used for the esterification reaction can be appropriately determined in consideration of the activity of the lipase, and is preferably from 0.1 to 50 parts, more preferably from 0.5 to 30 parts, even more preferably from 1.0 to 15 parts with respect to 100 parts of raw materials including fatty acids or the like and glycerin.

The reaction temperature in the esterification reaction is not particularly limited, and is preferably from 20 to 80°C, more preferably from 30 to 70°C, from the viewpoint of reactivity. Further, the reaction time is preferably 10 hours or less, more preferably from 0.1 to 8 hours, more preferably from 0.2 to 7 hours, even more preferably from from 0.3 to 6 hours, from the viewpoint of industrial productivity.

The step (4) is a step of bringing the resulting fat or oil composition into contact with an adsorbent to refine the fat or oil composition.

The treatment with an adsorbent is a step of bringing a fat or oil composition into contact with an adsorbent or the like to additionally improve a color and a taste and flavor. A porous adsorbent is preferably used as the adsorbent, and examples thereof include activated carbon, silicon dioxide, and a solid acid adsorbent. Examples of the solid acid adsorbent include acid clay, activated clay, activated alumina, silica gel, silica/alumina, and aluminum silicate. The adsorbent may be used alone, or two or more of the adsorbents may be used in combination. Of those, a solid acid adsorbent is preferred, and acid clay and activated clay are more preferred, from the viewpoint of reducing the content of by-products and the viewpoint of improving the taste and flavor and the color. The amount of the adsorbent to be used is preferably less than 3%, more preferably from 0.1% to less than 2.5%, more preferably from 0.2 to 2%, even more preferably from 0.3 to 1.75%, with respect to the fat or oil composition from the viewpoint of additionally improving the color and the taste and flavor and the viewpoint of enhancing the productivity.

Further, a refinement step that is generally used for a fat or oil may be used as the refinement step of the fat or oil composition according to the present invention. Specifically, there may be given a top cut distillation step, an acid treatment step, a water washing step, a deodorization step, and a thin-film evaporation treatment step, and the like.

The top cut distillation step refers to the step of distilling a fat or oil composition to remove light by-products such as fatty acids.

The acid treatment step refers to a step including adding a chelating agent such as citric acid to a fat or oil, followed by their mixing, and then subjecting the resulting mixture to oil-water separation or dehydration under reduced pressure to remove water, to thereby remove impurity. The amount of the chelating agent to be used is preferably from 0.001 to 5%, more preferably from 0.01 to 1%, with respect to the fat or oil.

The water washing step refers to a step of bringing a fat or oil into contact with water to perform the operation of oil-water separation. Water washing can remove a water-soluble impurity. The water washing step is preferably repeated a plurality of times (for example, three times).

The thin-film evaporation treatment step refers to a treatment involving forming a raw material for distillation into a thin film, followed by heating, to evaporate a light fraction from a fat or oil, thus yielding the treated fat or oil as a residual fraction. The treatment is carried out by using a thin-film evaporator. Examples of the thin-film evaporator includes a centrifugal thin-film distillation apparatus, a falling film distillation apparatus, and a wiped film evaporator (wiped film distillation), depending on methods of forming a thin film.

The deodorization treatment is treatment involving applying steam distillation under reduced pressure to a fat or oil composition. The treatment may be performed at a treatment temperature of preferably from 120 to 270°C, more preferably from 150 to 260°C, even more preferably from 180 to 250°C. Further, the treatment may be performed for a treatment time of preferably from 1 to 300 minutes, more preferably from 3 to 180 minutes, even more preferably from 5 to 110 minutes.

In the present invention, it is preferred to perform the deodorization treatment particularly in the final step of refining treatment, from the viewpoint of improving the taste and flavor of a fat or oil composition. The conditions for the deodorization treatment to be used in this case are preferably such conditions that the deodorization treatment has a low thermal history (mild) than that of usual deodorization treatment.

The usual deodorization treatment is performed, for example, at from 190 to 220°C for from 120 to 300 minutes, from 220 to 250°C for from 30 to 180 minutes, or from 250 to 270°C for from 5 to 60 minutes. On the other hand, the deodorization treatment having a low thermal history is carried out at preferably from 120 to 230°C, more preferably from 175°C to 230°C, for preferably from 1 to 110 minutes, more preferably from 5 to 110 minutes.

In particular, from the viewpoint of improving the taste and flavor of a fat or oil composition, (A) if the treatment temperature is 120°C or more and 205°C or less, the treatment time is preferably from 5 to 110 minutes, more preferably from 15 to 70 minutes, (B) if the treatment temperature is more than 205°C and 215°C or less, the treatment time is preferably from 5 to 50 minutes, more preferably from 8 to 45 minutes, even more preferably from 12 to 40 minutes, and (C) if the treatment temperature is more than 215°C and 230°C or less, the treatment time is preferably from 5 to 30 minutes, more preferably from 7 to 27 minutes, even more preferably from 10 to 24 minutes.

Further, it is preferred to select a pressure of from 0.01 to 4 kPa, more preferably from 0.03 to 1 kPa, from the viewpoint of improving the taste and flavor of a fat or oil. From the same viewpoint as described above, the amount of water vapor is preferably from 0.1 to 20%, more preferably from 0.5 to 10%, with respect to the amount of a fat or oil.

In the deodorization treatment, it may introduce water in place of water vapor and contact with the water vapor produced from water in an apparatus. Alternatively, the treatment involving contacting with an inert gas in place of water vapor may be carried out. Examples of the inert gas include nitrogen, helium, and argon. Of those, nitrogen is preferred. It is preferred to adopt, as treatment conditions under which the inert gas is brought into contact, the same condition as that for water vapor.

A method of performing the deodorization treatment of a fat or oil composition is not particularly limited, and it may adopt a batch method, a semi-continuous method, a continuous method, or the like. When the amount of a fat or oil to be treated is small, the batch method is preferably used, and when the amount is large, the semi-continuous method or the continuous method is preferably used.

As an apparatus for the semi-continuous method, there is given, for example, a Girdler type deodorization apparatus including a deodorization tower equipped with several trays, or the like. As an apparatus for the continuous method, there is given, for example, a thin-film deodorization apparatus filled with a structure, in which a film-like fat or oil can be brought into contact with water vapor.

An antioxidant may be further added to the fat or oil composition according to the present invention as is the case with a common edible fat or oil, from the viewpoints of improving storage stability and the stability of a taste and flavor. Examples of the antioxidant include natural antioxidants such as a rosemary extract, tocopherol, ascorbyl palmitate, ascorbyl stearate, dibutylhydroxytoluene (BHT), butylated hydroxyanisole (BHA), and phospholipids, or the like.

Further, an emulsifier or the like may be added to the fat or oil composition according to the present invention from the viewpoints of, for example, improving the texture of cooked products or their taste and flavor and imparting physiological effects. As the emulsifier or the like, there are given, for example, polyol-fatty acid ester such as polyglycerin condensed ricinolic acid ester, polyglycerin fatty acid ester, sucrose fatty acid ester, sorbitan fatty acid ester, polyoxyethylene sorbitan fatty acid ester, or propylene glycol- fatty acid ester, organic acid monoglycerides, phytosterol, and phytosterol ester, or the like.

The fat or oil composition according to the present invention may be used in exactly the same applications as a common edible fat or oil, and may be widely applied to various foods and drinks in which a fat or oil is used. The fat or oil composition according to the present invention may be used for, for example: oil-in-water type fat or oil processed foods such as drink, dessert, ice cream, dressing, toppings, mayonnaise, and sauce for grilled meat; water-in-oil type fat or oil processed foods such as margarine and spread; processed fat or oil foods such as peanut butter, frying shortening, and baking shortening; processed foods such as potato chips, snacks, cake, cookies, pies, bread, and chocolate; bakery mixes; processed meat products; frozen entrees; and frozen foods.

Next, specific examples of the embodiments of the present invention are described.
[1] A fat or oil composition, comprising: 20% by mass or more of diacylglycerols and 10% by mass or less of monoacylglycerols with respect to a total content of triacylglycerols, diacylglycerols, monoacylglycerols and free fatty acids in the fat or oil composition; and 2% by mass or less of fatty acid esters having a total carbon atom of 43 or more and less than 51 in the fat or oil composition, wherein the fat or oil composition is obtainable by a production method comprising the following steps (1), (2), (3), and (4): (1) hydrolyzing a raw material fat or oil selected from one or more of sunflower oil, rapeseed oil and linseed oil, with an oil and fat hydrolase; (2) cooling the hydrolyzed reaction product to precipitate a solid, followed by removing the solid by fractionation, to thereby prepare a fractionated fatty acid; (3) subjecting the resulting fractionated fatty acid and glycerin to an esterification reaction to prepare a fat or oil composition comprising 20% by mass or more of diacylglycerols with respect to a total content of triacylglycerols, diacylglycerols, monoacylglycerols and free fatty acids in the fat or oil composition; and (4) bringing the resulting fat or oil composition into contact with an adsorbent.
[2] The fat or oil composition according to Item [1], in which the ratio of diacylglycerols with respect to the total content of triacylglycerols, diacylglycerols, monoacylglycerols and free fatty acids in the fat or oil composition is preferably 25% by mass or more, more preferably 30% by mass or more, more preferably 40% by mass or more, more preferably 50% by mass or more, even more preferably 70% by mass or more.
[3] The fat or oil composition according to Item [1] or [2], in which the ratio of diacylglycerols with respect to the total content of triacylglycerols, diacylglycerols, monoacylglycerols and free fatty acids in the fat or oil composition is preferably 99% by mass or less, more preferably 98% by mass or less, even more preferably 97% by mass or less.
[4] The fat or oil composition according to Item [1], in which the ratio of diacylglycerols with respect to the total of triacylglycerols, diacylglycerols, monoacylglycerols, and free fatty acids in the fat or oil composition is preferably from 20 to 99% by mass, more preferably from 25 to 99% by mass, more preferably from 30 to 99% by mass, more preferably from 40 to 99% by mass, more preferably from 50 to 99% by mass, even more preferably from 70 to 99% by mass.
[5] The fat or oil composition according to any one of Items [1] to [4], in which the ratio of monoacylglycerols with respect to the total content of triacylglycerols, diacylglycerols, monoacylglycerols and free fatty acids in the fat or oil composition is preferably 5% by mass or less, more preferably 2.5% by mass or less, even more preferably 2% by mass or less.
[6] The fat or oil composition according to any one of Items [1] to [5], in which the ratio of monoacylglycerols with respect to the total content of triacylglycerols, diacylglycerols, monoacylglycerols and free fatty acids in the fat or oil composition is preferably 0, more preferably 0.1% by mass or more.
[7] The fat or oil composition according to any one of Items [1] to [4], in which the ratio of monoacylglycerols with respect to the total content of triacylglycerols, diacylglycerols, monoacylglycerols and free fatty acids in the fat or oil composition is preferably from 0 to 10% by mass, more preferably from 0 to 5% by mass, more preferably from 0 to 2.5% by mass, even more preferably from 0.1 to 2% by mass.
[8] The fat or oil composition according to any one of Items [1] to [7], in which the total content of triacylglycerols, diacylglycerols, monoacylglycerols and free fatty acids in the fat or oil composition is preferably 95% by mass or more, more preferably 98% by mass or more, even more preferably 99% by mass or more.
[9] The fat or oil composition according to any one of Items [1] to [8], in which the total content of triacylglycerols, diacylglycerols, monoacylglycerols and free fatty acids in the fat or oil composition is preferably 99.8% by mass or less, more preferably 99.75% by mass or less, even more preferably 99.7% by mass or less.
[10] The fat or oil composition according to any one of Items [1] to [9], in which the content of fatty acid esters having a total carbon atom of 43 or more and less than 51 in the fat or oil composition is preferably 1.9% by mass or less, more preferably 1.8% by mass or less.
[11] The fat or oil composition according to any one of Items [1] to [10], in which the content of fatty acid esters having a total carbon atom of 43 or more and less than 51 in the fat or oil composition is preferably 0, more preferably 0 . 1 0 by mass or more, more preferably 0.3% by mass or more, even more preferably 0.5% by mass or more.
[12] The fat or oil composition according to any one of Items [1] to [9], in which the content of fatty acid esters having a total carbon atom of 43 or more and less than 51 in the fat or oil composition is preferably from 0 to 1.9% by mass, more preferably from 0.1 to 1.9% by mass, more preferably from 0.3 to 1.9% by mass, more preferably from 0.5 to 1.9% by mass, even more preferably from 0.5 to 1.8% by mass.
[13] The fat or oil composition according to any one of Items [1] to [12], in which the content of saturated fatty acids in constituent fatty acids of a fat or oil in the fat or oil composition is preferably 8% by mass or less, more preferably 7.5% by mass or less, more preferably 7% by mass or less, even more preferably 6.5% by mass or less, and is preferably 0, more preferably 1% by mass or more.
[14] The fat or oil composition according to any one of Items [1] to [12], in which the content of saturated fatty acids in constituent fatty acids of a fat or oil in the fat or oil composition is preferably from 0 to 7.5% by mass, more preferably from 0 to 7% by mass, even more preferably from 1 to 6.5% by mass.
[15] The fat or oil composition according to any one of Items [1] to [14], in which the content of trans isomers in constituent fatty acids of a fat or oil in the fat or oil composition is preferably 4% by mass or less, more preferably 3% by mass or less, more preferably 2.5% by mass or less.
[16] The fat or oil composition according to any one of Items [1] to [15], in which the content of α-linolenic acid (C18:3) in constituent fatty acids of a fat or oil in the fat or oil composition is preferably 10% by mass or less, more preferably 8% by mass or less, more preferably 5% by mass or less, more preferably 3% by massorless, even more preferably 2% by mass or less, and is preferably 0, more preferably 0.1% by mass or more.
[17] The fat or oil composition according to any one of Items [1] to [15], in which the content of α-linolenic acid (C18:3) in constituent fatty acids of a fat or oil in the fat or oil composition is preferably from 0 to 8% by mass, more preferably from 0 to 5% by mass, more preferably from 0 to 3% by mass, more preferably from 0 to 2% by mass, even more preferably from 0.1 to 2% by mass.
[18] The fat or oil composition according to any one of Items [1] to [17], in which the content of linoleic acid (C18:2) in constituent fatty acids of a fat or oil in the fat or oil composition is preferably 20% by mass or more, more preferably 25% by mass or more, more preferably 30% by mass or more, more preferably 40% by mass or more, more preferably 45% by mass or more, even more preferably 50% by mass or more, and is preferably 60% by mass or less, more preferably 55% by mass or less.
[19] The fat or oil composition according to any one of Items [1] to [17], in which the content of linoleic acid (C18:2) in constituent fatty acids of a fat or oil in the fat or oil composition is preferably from 20 to 60% by mass, more preferably from 25 to 60% by mass, more preferably from 30 to 60% by mass, more preferably from 40 to 60% by mass, more preferably from 45 to 55% by mass, even more preferably from 50 to 55% by mass.
[20] The fat or oil composition according to any one of Items [1] to [19], in which the content of saturated fatty acids in constituent fatty acids of the diacylglycerols is preferably 8% by mass or less, more preferably 7.5% by mass or less, more preferably 7% by mass or less, even more preferably 6.5% by mass or less, and is preferably 0, more preferably 1% by mass or more.
[21] The fat or oil composition according to any one of Items [1] to [20], in which the content of trans isomers in constituent fatty acids of the diacylglycerols is preferably 4% by mass or less, more preferably 3% by mass or less, even more preferably 2.5% by mass or less.
[22] The fat or oil composition according to any one of Items [1] to [21], in which the content of α-linolenic acid (C18:3) in constituent fatty acids of the diacylglycerols is preferably 10% by mass or less, more preferably 8% by mass or less, more preferably 5% by mass or less, more preferably 3% by mass or less, even more preferably 2% by mass or less, and is preferably 0, more preferably 0.1% by mass or more.
[23] The fat or oil composition according to any one of Items [1] to [21], in which the content of linoleic acid (C18:2) in constituent fatty acids of the diacylglycerols is preferably 20% by mass or more, more preferably 25% by mass or more, more preferably 30% by mass or more, more preferably 40% by mass or more, more preferably 45% by mass or more, even more preferably 50% by mass or more, and is preferably 60% by mass or less, more preferably 55% by mass or less.
[24] The fat or oil composition according to any one of Items [1] to [23], in which the content of MCPD-FS in the fat or oil composition is 3 ppm or less, more preferably 2 ppm or less, even more preferably 1 ppm or less, which is measured by a Deutsche Gesellschaft fur Fettwissenschaft (DGF) standard method C-III 18(09).
[25] A method for producing a fat or oil composition comprising: 20% by mass or more of diacylglycerols and 10% by mass or less of monoacylglycerols with respect to a total content of triacylglycerols, diacylglycerols, monoacylglycerols and free fatty acids in the fat or oil composition; and 2% by mass or less of fatty acid esters having a total carbon atom of 43 or more and less than 51 in the fat or oil composition, the production method being comprising the following steps (1), (2), (3), and (4):
   (1) hydrolyzing a raw material fat or oil selected from one or more of sunflower oil, rapeseed oil and linseed oil, with an oil and fat hydrolase;
   (2) cooling the hydrolyzed reaction product to precipitate a solid, followed by removing the solid by fractionation, to thereby prepare a fractionated fatty acid;
   (3) subjecting the resulting fractionated fatty acid and glycerin to an esterification reaction to prepare a fat or oil composition comprising 20% by mass or more of diacylglycerols with respect to a total content of triacylglycerols, diacylglycerols, monoacylglycerols and free fatty acids in the fat or oil composition; and
   (4) bringing the resulting fat or oil composition into contact with an adsorbent.
[26] The production method according to Item [25], in which the cooling temperature for solid precipitation is preferably from -5 to 15°C, more preferably from 0 to 15°C, more preferably from 2 to 13°C, more preferably from 3 to 11°C, even more preferably from 3 to 9°C.
[27] The production method according to Item [26], in which the cooling rate until the temperature reaches the cooling temperature range is preferably 10°C/min or less, more preferably from 0.1 to 8°C/min, even more preferably from 0.3 to 5°C/min.
[28] The production method according to any one of Items [25] to [27], in which the concentration of saturated fatty acids in the fractionated fatty acids after the fractionation is preferably 8% or less, more preferably 7.5% or less, even more preferably 7% or less.

### Examples

### (Analysis method)

### (i) Measurement of MCPD-FS (in accordance with Option A of Deutsche Gesellschaft für Fettwissenschaft (DGF) standard method C-III 18(09))

About 100 mg of a fat or oil sample were weighed in a test tube with a lid. 50 µL of an internal standard substance (3-MCPD-d5/t-butyl methyl ether), 500 µL of a t-butyl methyl ether/ethyl acetate-mixed solution (volume ratio: 8:2), and 1 mL of 0.5 N sodiummethoxide were added to the fat or oil sample, followed by stirring, and the resulting mixture was left to stand for 10 minutes. 3 mL of hexane and 3 mL of a 3.3% acetic acid/20% sodium chloride aqueous solution were added thereto, followed by stirring, and the upper layer of the resulting mixture was removed. 3 mL of hexane were further added, followed by stirring, and the upper layer of the resulting mixture was then removed. 250 µL of a mixed solution of 1 g of phenylboronic acid and 4 mL of 95% acetone were added, followed by stirring, and the test tube was hermetically sealed and heated at 80 °C for 20 minutes. 3 mL of hexane were added thereto, followed by stirring, and the upper layer of the resulting mixture was subjected to measurement with a gas chromatograph-mass spectrometer (GC-MS) to quantify MCPD-FS. Note that, the case where the content of MCPD-FS was found to be 0.144 ppm or less was defined as being non-detectable (ND).

### (ii) Glyceride composition

About 10 mg of a fat or oil sample and 0.5 mL of a trimethylsilylating agent ("Silylating Agent TH" manufactured by Kanto Chemical Co., Inc.) were added into a glass sample bottle, followed by hermetical sealing, and the glass sample bottle was heated at 70°C for 15 minutes. 1.0 mL of water and 1.5 mL of hexane were added to the mixture, followed by shaking. The mixture was left to stand, and then the upper layer was subjected to gas-liquid chromatography (GLC) to perform analysis. The ratio of peak areas of triacylglycerols, diacylglycerols, monoacylglycerols and free fatty acids was subjected to sensitivity correction to determine the composition of the glycerides.

### <GLC conditions>

Apparatus: Agilent 6890 series (manufactured by Agilent Technologies)
Integrator: ChemStation B 02.01 SR2 (manufactured by Agilent Technologies)
Column: DB-lht (manufactured by Agilent J&W)
Carrier gas: 1.0 mL He/min
Injector: Split (1:50), T=340°C
Detector: FID, T=350°C
Oven temperature: Raise the temperature from80°C to 340°C at 10°C/min, and keep the temperature for 15 min.

### (iii) Constituent fatty acid composition

Fatty acid Methyl esters were prepared in accordance with "Methods of preparing fatty acid methyl esters (2.4.1. -1996)" in "Standard methods for the Analysis of Fats, Oils and Related Materials" edited by Japan Oil Chemists' Society. The resulting samples were measured by the American Oil Chemists. Society Official Method Ce 1f-96 (GLC method).

### (iv) Fatty acid ester

About 10 mg of a fat or oil sample and 0.5 mL of a trimethylsilylating agent ("Silylating Agent TH" manufactured by Kanto Chemical Co., Inc.) were added into a glass sample bottle, followed by hermetical sealing, and the glass sample bottle was heated at 70°C for 15 minutes. 1.0 mL of water and 1.5 mL of hexane were added to the mixture, followed by shaking. The mixture was left to stand, and then the upper layer was subjected to gas-liquid chromatography (GLC) to perform analysis. Then, the content of fatty acid esters having a total carbon atom of 43 or more and less than 51 in the fat or oil composition was determined based on the ratio of the peak areas of fatty acid esters having 43 or more and less than 51 carbon atoms to all the peak areas.

### <GLC conditions>

Apparatus: Agilent 6890 series (manufactured by Agilent Technologies)
Integrator: ChemStation B 02.01 SR2 (manufactured by Agilent Technologies)
Column: CP, TAP for Triglyceride (manufactured by VARIAN)
Carrier gas: 1.7 mL He/min
Injector: Split (1:50), T=345°C
Detector: FID, T=355°C
Oven temperature: Keep the temperature at 220°C for 12 min, raise the temperature to 305°C at 10°C/min, keep the temperature for 15 min, raise the temperature to 355°C at 10°C/min, and keep the temperature for 30 min.

### (Evaluation to taste and flavor)

The evaluation to a taste and flavor was performed by a panel of five members . Each member ate 1 to 2 g of each sample and performed a sensory evaluation based on the criteria shown below. The rounded average of the scores was shown.
4: Almost no stimulative taste and very good taste and flavor
3: Less stimulative taste and good taste and flavor
2: Slightly stimulative taste and slightly bad taste and flavor
1: Stimulative taste and bad taste and flavor

### (Production of fat or oil composition)

(1) 100 parts by mass of high-linoleic sunflower oil and 100 parts by mass of water were mixed, and the resulting mixture was subjected to a hydrolysis reaction with an enzyme, yielding a fatty acid. The resulting fatty acid was cooled to 3°C in a step-by-step manner to precipitate the fatty acid. The fatty acid precipitated was fractionated by centrifugation, yielding a fractionated sunflower oil fatty acid A.
(2) 100 parts by mass of the fractionated sunflower fatty acid A and 15 parts by mass of glycerin were mixed, and the resulting mixture was subjected to an esterification reaction with an enzyme, yielding a diacylglycerol (DAG)-containing fat or oil. The resulting esterified mixture was subjected to distillation to remove fatty acid and monoacylglycerol (MAG), and the resulting fat or oil was subjected to acid treatment (a 10% citric acid aqueous solution was added at 2%) and water washing (three times with distilled water), yielding a treated oil. The treated oil was brought into contact with water vapor to deodorize the oil, and then brought into contact with activated clay (GALLEON EARTH V2R, Mizusawa Industrial Chemicals, Ltd.), yielding a decolorized oil. Further, the oil was brought into contact with water vapor to deodorize the oil, yielding a fat or oil A. Table 1 shows its analysis values.
   (1) 35 parts by mass of high-linoleic sunflower oil, 45 parts by mass of high-oleic sunflower oil, 20 parts by mass of rapeseed oil, and 100 parts by mass of water were mixed, and the resulting mixture was subjected to a hydrolysis reaction with an enzyme, yielding a fatty acid. The resulting fatty acid was cooled to 8°C in a step-by-step manner to precipitate the fatty acid. The fatty acid precipitated was fractionated by centrifugation, yielding a fractionated sunflower fatty acid B.
   (2) A fat or oil B was produced in the same manner as the fat or oil A except that the fractionated sunflower fatty acid B was used. Table 1 shows its analysis values.
      (1) 35 parts by mass of high-linoleic sunflower oil, 45 parts by mass of high-oleic sunflower oil, 20 parts by mass of rapeseed oil, and 100 parts by mass of water were mixed, and the resulting mixture was subjected to a hydrolysis reaction with an enzyme, yielding a fatty acid. The resulting fatty acid was cooled to 3°C in a step-by-step manner to precipitate the fatty acid. The fatty acid precipitated was fractionated by centrifugation, yielding a fractionated sunflower fatty acid C.
      (2) A fat or oil C was produced in the same manner as the fat or oil A except that the fractionated sunflower fatty acid C was used. Table 1 shows its analysis values.
         (1) 90 parts by mass of high-linoleic sunflower oil, 10 parts by mass of high-oleic sunflower oil, and 100 parts by mass of water were mixed, and the resulting mixture was subjected to a hydrolysis reaction with an enzyme, yielding a fatty acid. To the resulting fatty acid were added 15 g of a wetting agent (water: 94%, a mixture of sodium decyl sulfate and sodium dodecyl sulfate: 2%, magnesium sulfate: 4%), and the resulting mixture was cooled to 12°C in a step-by-step manner to precipitate the fatty acid. The fatty acid precipitated was fractionated by centrifugation, yielding a fractionated sunflower fatty acid D.
         (2) A fat or oil D was produced in the same manner as the fat or oil A except that the fractionated sunflower fatty acid D was used. Table 1 shows its analysis values.
            (1) 79 parts by mass of high-linoleic sunflower oil, 9 parts by mass of high-oleic sunflower oil, 12 parts by mass of linseed oil, and 100 parts by mass of water were mixed, and the resulting mixture was subjected to a hydrolysis reaction with an enzyme, yielding a fatty acid. The resulting fatty acid was cooled to 3°C in a step-by-step manner to precipitate the fatty acid. The fatty acid precipitated was fractionated by centrifugation, yielding a fractionated sunflower fatty acid E.
            (2) A fat or oil E was produced in the same manner as the fat or oil A except that the fractionated sunflower fatty acid E was used. Table 1 shows its analysis values.

100 parts by mass of the fractionated sunflower fatty acid D and 10 parts by mass of glycerin were mixed, and the resulting mixture was subjected to a glycerolysis reaction using sodium methylate as a catalyst, yielding a diacylglycerol (DAG)-containing fat or oil. The resulting glycerolysis reaction product was subjected to distillation to remove fatty acid and monoacylglycerol, and the resulting fat or oil was subjected to acid treatment (a 10% citric acid aqueous solution was added at 2%) and water washing (five times with distilled water), yielding a treated oil. The treated oil was brought into contact with water vapor to deodorize the oil, and then brought into contact with activated clay (GALLEON EARTH V2R, Mizusawa Industrial Chemicals, Ltd.), yielding a decolorized oil. Further, the oil was brought into contact with water vapor to deodorize the oil, yielding a fat or oil F. Table 1 shows its analysis values.

50 parts by mass of the fat or oil B and 50 parts by mass of rapeseed oil were mixed, yielding a fat or oil G. Table 1 shows its analysis values.

70 parts by mass of rapeseed oil, 30 parts by mass of linseed oil, and 100 parts by mass of water were mixed, and the resulting mixture was subjected to a hydrolysis reaction with an enzyme, yielding a fatty acid. 100 parts by mass of the fatty acid and 15 parts by mass of glycerin were mixed, and the resulting mixture was subjected to an esterification reaction with an enzyme, yielding a diacylglycerol (DAG)-containing fat or oil. The resulting esterified mixture was subjected to distillation to remove fatty acid and monoacylglycerol (MAG), and the resulting fat or oil was subjected to acid treatment (a 10% citric acid aqueous solution was added at 2%) and water washing (three times with distilled water), yielding a treated oil. The treated oil was brought into contact with water vapor to deodorize the oil, and then brought into contact with activated clay (GALLEON EARTH V2R, Mizusawa Industrial Chemicals, Ltd.), yielding a decolorized oil. Further, the oil was brought into contact with water vapor to deodorize the oil, yielding a fat or oil H. Table 1 shows its analysis values.

A fat or oil I was produced in the same manner as the fat or oil H except that 100 parts by mass of high-linoleic sunflower oil were used. Table 1 shows its analysis values.

A fat or oil J was produced in the same manner as the fat or oil H except that 35 parts by mass of high-linoleic sunflower oil, 45 parts by mass of high-oleic sunflower oil, and 20 parts by mass of rapeseed oil were used. Table 1 shows its analysis values.

A fat or oil K was produced in the same manner as the fat or oil H except that 100 parts by mass of sunflower oil were used. Table 1 shows its analysis values.

A fat or oil L was produced in the same manner as the fat or oil H except that 100 parts by mass of high-oleic sunflower oil were used. Table 1 shows its analysis values.
(1) 100 parts by mass of soybean oil and 100 parts by mass of water were mixed, and the resulting mixture was subjected to a hydrolysis reaction with an enzyme, yielding a fatty acid. The resulting fatty acid was cooled to -3°C in a step-by-step manner to precipitate the fatty acid. The fatty acid precipitated was fractionated by centrifugation, yielding a fractionated soybean fatty acid.
(2) A fat or oil M was produced in the same manner as the fat or oil A except that the fractionated soybean fatty acid was used. Table 1 shows its analysis values.

A fat or oil N was produced in the same manner as the fat or oil H except that 100 parts by mass of rapeseed oil were used. Table 1 shows its analysis values.
(1) 70 parts by mass of soybean oil, 30 parts by mass of rapeseed oil, and 100 parts by mass of water were mixed, and the resulting mixture was subjected to a hydrolysis reaction with an enzyme, yielding a fatty acid. The resulting fatty acid was cooled to -3°C in a step-by-step manner to precipitate the fatty acid. The fatty acid precipitated was fractionated by centrifugation, yielding a fractionated soybean/rapeseed fatty acid.
(2) A fat or oil O was produced in the same manner as the fat or oil A except that the fractionated soybean/rapeseed fatty acid was used. Table 1 shows its analysis values.

**[Table 1]**

| | | Example | | | | | | | | Comparative Example | | | | | | |
|---|---|---|---|---|---|---|---|---|---|---|---|---|---|---|---|---|
| | | 1 | 2 | 3 | 4 | 5 | 6 | 7 | 8 * | 1 | 2 | 3 | 4 | 5 | 6 | 7 |
| | | Fat or oil A | Fat or oil B | Fat or oil C | Fat or oil D | Fat or oil E | Fat or oil F | Fat or oil G | Fat or oil H | Fat or oil I | Fat or oil J | Fat or oil K | Fat or oil L | Fat or oil M | Fat or oil N | Fat or oil O |
| Glyceride composition (%) | MAG | 0.29 | 0.27 | 0.40 | 0.35 | 0.00 | 0.05 | 0.13 | 0.89 | 0.37 | 0.13 | 0.00 | 0.00 | 0.05 | 0.00 | 0.67 |
| | DAG | 89.76 | 83.93 | 87.27 | 96.87 | 87.89 | 29.20 | 43.55 | 75.43 | 85.77 | 83.10 | 88.66 | 87.89 | 71.26 | 83.53 | 84.93 |
| | TAG | 9.87 | 15.73 | 12.25 | 2.71 | 12.04 | 70.68 | 56.32 | 23.60 | 13.78 | 16.68 | 11.27 | 12.04 | 28.57 | 16.38 | 14.33 |
| | FFA | 0.08 | 0.07 | 0.08 | 0.06 | 0.08 | 0.08 | 0.00 | 0.08 | 0.08 | 0.09 | 0.08 | 0.08 | 0.13 | 0.09 | 0.08 |
| Fatty acid composition (%) | C14:0 | 0.05 | 0.05 | 0.06 | 0.06 | 0.06 | 0.00 | 0.03 | 0.00 | 0.06 | 0.05 | 0.00 | 0.04 | 0.06 | 0.06 | 0.08 |
| | C16:0 | 2.74 | 3.31 | 2.75 | 4.13 | 4.27 | 3.31 | 3.80 | 4.06 | 5.99 | 4.55 | 6.80 | 3.82 | 2.57 | 4.10 | 3.62 |
| | C18:0 | 1.00 | 1.46 | 1.09 | 1.84 | 2.01 | 1.26 | 1.63 | 2.30 | 2.92 | 2.82 | 2.78 | 3.15 | 0.95 | 1.79 | 1.30 |
| | C18:1 | 39.22 | 64.06 | 64 .41 | 36.74 | 34.85 | 26.05 | 63.16 | 49.05 | 35.15 | 61.68 | 15.53 | 84 .43 | 30.58 | 60.77 | 50.68 |
| | C18:2 | 55.22 | 27.68 | 28.07 | 56.38 | 51.43 | 68.28 | 23.50 | 18.95 | 54.08 | 26.89 | 73.26 | 6.26 | 57.91 | 19.95 | 26.64 |
| | C18:3 | 0.88 | 1.81 | 1. 97 | 0.18 | 6.99 | 0.28 | 5.88 | 23.75 | 0.16 | 1. 94 | 0.53 | 0.31 | 6.71 | 10.59 | 14.12 |
| | C20:0 | 0.10 | 0.25 | 0.24 | 0.16 | 0.00 | 0.08 | 0.43 | 0.47 | 0.24 | 0.36 | 0.26 | 0.31 | 0.27 | 0.66 | 0.88 |
| | C20:1 | 0.27 | 0.43 | 0.46 | 0.15 | 0.00 | 0.18 | 0.41 | 0.68 | 0.18 | 0.44 | 0.21 | 0.28 | 0.29 | 1.31 | 1.74 |
| | C22:0 | 0.28 | 0.59 | 0.56 | 0.19 | 0.17 | 0.14 | 0.46 | 0.29 | 0.75 | 0.77 | 0.23 | 0.93 | 0.35 | 0.40 | 0.54 |
| | C22:1 | 0.00 | 0.00 | 0.00 | 0.00 | 0.00 | 0.28 | 0.00 | 0.08 | 0.04 | 0.04 | 0.06 | 0.00 | 0.04 | 0.00 | 0.00 |
| | C24:0 | 0.12 | 0.23 | 0.21 | 0.05 | 0.06 | 0.05 | 0.18 | 0.14 | 0.31 | 0.30 | 0.13 | 0.35 | 0.17 | 0.17 | 0.23 |
| | Others | 0.14 | 0.13 | 0.18 | 0.11 | 0.16 | 0.08 | 0.53 | 0.22 | 0.11 | 0.17 | 0.22 | 0.11 | 0.10 | 0.20 | 0.18 |
| | Total of saturated fatty acid | 4.28 | 5.89 | 4.92 | 6.44 | 6.56 | 4.85 | 6.49 | 7.27 | 10.28 | 8.85 | 10.19 | 8.61 | 4.36 | 7.18 | 6.64 |
| Fatty acid ester having total carbon atom of 43 or more and less than 51 (%) | | 1.28 | 1.78 | 1.66 | 1.29 | 1.02 | 0.66 | 0.46 | 1.82 | 2.74 | 2.06 | 2.33 | 2.69 | 2.33 | 2.56 | 2.41 |
| MCPD-FS (ppm) | | ND | ND | ND | ND | ND | ND | ND | ND | ND | ND | ND | ND | ND | ND | ND |

| | | | | | | | | | | | | | | | | |
|---|---|---|---|---|---|---|---|---|---|---|---|---|---|---|---|---|
| * Reference Example | | | | | | | | | | | | | | | | |

### Examples 1 to 8 and Comparative Examples 1 to 7

The fat or oil compositions having the compositions shown in Table 1 were evaluated for their taste and flavor. Table 2 shows the results.

### (Evaluation criteria)

4: Almost no stimulative taste and very good taste and flavor
3: Less stimulative taste and good taste and flavor
2: Slightly stimulative taste and slightly bad taste and flavor
1: Stimulative taste and bad taste and flavor

**[Table 2]**

| | Examp le 1 | Examp le 2 | Examp le 3 | Examp le 4 | Examp le 5 | Examp le 6 | Examp le 7 | Examp le 8* | Comp. Ex. 1 | Comp. Ex. 2 | Comp. Ex. 3 | Comp. Ex. 4 | Comp. Ex. 5 | Comp. Ex. 6 | Comp. Ex. 7 |
|---|---|---|---|---|---|---|---|---|---|---|---|---|---|---|---|
| Ratio of DAG to total content of TAG, DAG, MAG and FFA (%) | 89.76 | 83.93 | 87.27 | 96.87 | 87.89 | 29.20 | 43.55 | 75.43 | 85.77 | 83.10 | 88.66 | 87.89 | 71.26 | 83.53 | 84.93 |
| α-Linolenic acid (C18:3) in constituent fatty acids of fat or oil in fat or oil composition (%) | 0.88 | 1.81 | 1.97 | 0.18 | 6.99 | 0.28 | 5.88 | 23.75 | 0.16 | 1.94 | 0.53 | 0.31 | 6.71 | 10.59 | 14.12 |
| Total content of saturated fatty acids in constituent fatty acids of fat or oil in fat or oil composition (%) | 4.28 | 5.89 | 4.92 | 6.44 | 6.56 | 4.85 | 6.49 | 7.27 | 10.28 | 8.85 | 10.19 | 8.61 | 4.36 | 7.18 | 6.64 |
| Fatty acid ester having total carbon atom of 43 or more and less than 51 in fat or oil composition (%) | 1.28 | 1.78 | 1.66 | 1.29 | 1.02 | 0.66 | 0.46 | 1.82 | 2.74 | 2.06 | 2.33 | 2.69 | 2.33 | 2.56 | 2.41 |
| MCPD-FS in fat or oil composition (ppm) | ND | ND | ND | ND | ND | ND | ND | ND | ND | ND | ND | ND | ND | ND | ND |
| Taste and Flavor | 4 | 4 | 4 | 4 | 3 | 4 | 3 | 3 | 1 | 1 | 1 | 1 | 2 | 2 | 2 |

| | | | | | | | | | | | | | | | |
|---|---|---|---|---|---|---|---|---|---|---|---|---|---|---|---|
| * Reference Example | | | | | | | | | | | | | | | |

As shown in Table 2, it found that the fat or oil compositions comprising 2% or less of fatty acid esters having 43 or more and less than 51 carbon atoms had good taste and flavor.

## Claims

1. A fat or oil composition, comprising:
20% by mass or more of diacylglycerols and 10% by mass or less of monoacylglycerols with respect to a total content of triacylglycerols, diacylglycerols, monoacylglycerols and free fatty acids in the fat or oil composition; and
2% by mass or less of fatty acid esters having a total carbon atom of 43 or more and less than 51 in the fat or oil composition,
wherein the fat or oil composition is obtainable by a production method comprising the following steps (1), (2), (3), and (4):
(1) hydrolyzing a raw material fat or oil selected from one or more of sunflower oil, rapeseed oil and linseed oil, with an oil and fat hydrolase;
(2) cooling the hydrolyzed reaction product to precipitate a solid, followed by removing the solid by fractionation, to thereby prepare a fractionated fatty acid;
(3) subjecting the resulting fractionated fatty acid and glycerin to an esterification reaction to prepare a fat or oil composition comprising 20% by mass or more of diacylglycerols with respect to a total content of triacylglycerols, diacylglycerols, monoacylglycerols and free fatty acids in the fat or oil composition; and
(4) bringing the resulting fat or oil composition into contact with an adsorbent.

2. The fat or oil composition according to claim 1, wherein a content of α-linolenic acid in constituent fatty acids of a fat or oil in the fat or oil composition is 10% by mass or less.

3. The fat or oil composition according to claim 1, wherein a content of α-linolenic acid in constituent fatty acids of a fat or oil in the fat or oil composition is from 0 to 5% by mass.

4. The fat or oil composition according to claim 1, wherein a content of α-linolenic acid in constituent fatty acids of a fat or oil in the fat or oil composition is from 0 to 2% by mass.

5. The fat or oil composition according to any one of claims 1 to 4, wherein a content of saturated fatty acids in constituent fatty acids of a fat or oil in the fat or oil composition is 8% by mass or less.

6. The fat or oil composition according to any one of claims 1 to 4, wherein a content of saturated fatty acids in constituent fatty acids of a fat or oil in the fat or oil composition is from 1 to 6.5% by mass.

7. The fat or oil composition according to any one of claims 1 to 6, wherein a content of linoleic acid in constituent fatty acids of a fat or oil in the fat or oil composition is from 20 to 60% by mass.

8. The fat or oil composition according to any one of claims 1 to 6, wherein a content of linoleic acid in constituent fatty acids of a fat or oil in the fat or oil composition is from 30 to 55% by mass.

9. The fat or oil composition according to any one of claims 1 to 8, wherein a content of the fatty acid esters having a total carbon atom of 43 or more and less than 51 in the fat or oil composition is from 0.1 to 1.9% by mass.

10. The fat or oil composition according to any one of claims 1 to 8, wherein a content of the fatty acid esters having a total carbon atom of 43 or more and less than 51 in the fat or oil composition is from 0.5 to 1.9% by mass.

11. The fat or oil composition according to any one of claims 1 to 10, wherein a content (ppm) of MCPD-FS in the fat or oil composition is 3 ppm or less, which is measured by a Deutsche Gesellschaft für Fettwissenschaft (DGF) standard method C-III 18(09).

12. A method for producing a fat or oil composition, comprising: 20% by mass or more of diacylglycerols and 10% by mass or less of monoacylglycerols with respect to a total content of triacylglycerols, diacylglycerols, monoacylglycerols and free fatty acids in the fat or oil composition; and 2% by mass or less of fatty acid esters having a total carbon atom of 43 or more and less than 51 in the fat or oil composition, the production method comprising the following steps (1), (2), (3), and (4):
(1) hydrolyzing a raw material fat or oil selected from one or more of sunflower oil, rapeseed oil and linseed oil with an oil and fat hydrolase;
(2) cooling the hydrolyzed reaction product to precipitate a solid, followed by removing the solid by fractionation, to thereby prepare a fractionated fatty acid;
(3) subjecting the resulting fractionated fatty acid and glycerin to an esterification reaction to prepare a fat or oil composition comprising 20% by mass or more of diacylglycerols with respect to a total content of triacylglycerols, diacylglycerols, monoacylglycerols and free fatty acids in the fat or oil composition; and
(4) bringing the resulting fat or oil composition into contact with an adsorbent.

13. The production method according to claim 12, wherein a content (ppm) of MCPD-FS in the resulting fat or oil composition is 3 ppm or less, which is measured by a Deutsche Gesellschaft für Fettwissenschaft (DGF) standard method C-III 18(09).

14. The production method according to claim 12 or 13, wherein a content of saturated fatty acids in constituent fatty acids of a fat or oil in the resulting fat or oil composition is 8% by mass or less.

15. The production method according to any one of claims 12 to 14, wherein a content of α-linolenic acid in constituent fatty acids of a fat or oil in the resulting fat or oil composition is 10% by mass or less.

## Patentansprüche

1. Fett- oder Ölzusammensetzung, umfassend:
20 Massen-% oder mehr Diacylglycerole und 10 Massen-% oder weniger Monoacylglycerole in Bezug auf einen Gesamtgehalt an Triacylglycerolen, Diacylglycerolen, Monoacylglycerolen und freien Fettsäuren in der Fett- oder Ölzusammensetzung; und
2 Massen-% oder weniger Fettsäureester mit einer Gesamtanzahl an Kohlenstoffatomen von 43 oder mehr und weniger als 51 in der Fett- oder Ölzusammensetzung,
wobei die Fett- oder Ölzusammensetzung durch ein Herstellungsverfahren, das die folgenden Schritte (1), (2), (3) und (4) umfasst, erhältlich ist:
(1) Hydrolysieren eines Ausgangsmaterialfetts oder -öls, ausgewählt aus einem oder mehr Vertretern aus Sonnenblumenöl, Rapsöl und Leinsamenöl, mit einer Öl- und Fetthydrolase;
(2) Kühlen des hydrolysierten Reaktionsprodukts so, dass ein Feststoff ausgefällt wird, gefolgt vom Entfernen des Feststoffs durch Fraktionieren, um so eine fraktionierte Fettsäure herzustellen;
(3) Durchführen einer Veresterungsreaktion der resultierenden fraktionierten Fettsäure mit Glycerin, so dass eine Fett- oder Ölzusammensetzung, die 20 Massen-% oder mehr Diacylglycerole in Bezug auf einen Gesamtgehalt an Triacylglycerolen, Diacylglycerolen, Monoacylglycerolen und freien Fettsäuren in der Fett- oder Ölzusammensetzung umfasst, hergestellt wird; und
(4) in Kontakt bringen der resultierenden Fett- oder Ölzusammensetzung mit einem Adsorptionsmittel.

2. Fett- oder Ölzusammensetzung gemäß Anspruch 1, wobei ein Gehalt an α-Linolensäure in Fettsäurebestandteilen eines Fetts oder Öls in der Fett- oder Ölzusammensetzung 10 Massen-% oder weniger beträgt.

3. Fett- oder Ölzusammensetzung gemäß Anspruch 1, wobei ein Gehalt an α-Linolensäure in Fettsäurebestandteilen eines Fetts oder Öls in der Fett- oder Ölzusammensetzung 0 bis 5 Massen-% beträgt.

4. Fett- oder Ölzusammensetzung gemäß Anspruch 1, wobei ein Gehalt an α-Linolensäure in Fettsäurebestandteilen eines Fetts oder Öls in der Fett- oder Ölzusammensetzung 0 bis 2 Massen-% beträgt.

5. Fett- oder Ölzusammensetzung gemäß mindestens einem der Ansprüche 1 bis 4, wobei ein Gehalt an gesättigten Fettsäuren in Fettsäurebestandteilen eines Fetts oder Öls in der Fett- oder Ölzusammensetzung 8 Massen-% oder weniger beträgt.

6. Fett- oder Ölzusammensetzung gemäß mindestens einem der Ansprüche 1 bis 4, wobei ein Gehalt an gesättigten Fettsäuren in Fettsäurebestandteilen eines Fetts oder Öls in der Fett- oder Ölzusammensetzung 1 bis 6,5 Massen-% beträgt.

7. Fett- oder Ölzusammensetzung gemäß mindestens einem der Ansprüche 1 bis 6, wobei ein Gehalt an Linolsäure in Fettsäurebestandteilen eines Fetts oder Öls in der Fett- oder Ölzusammensetzung 20 bis 60 Massen-% beträgt.

8. Fett- oder Ölzusammensetzung gemäß mindestens einem der Ansprüche 1 bis 6, wobei ein Gehalt an Linolsäure in Fettsäurebestandteilen eines Fetts oder Öls in der Fett- oder Ölzusammensetzung 30 bis 55 Massen-% beträgt.

9. Fett- oder Ölzusammensetzung gemäß mindestens einem der Ansprüche 1 bis 8, wobei ein Gehalt der Fettsäureester mit einer Gesamtanzahl an Kohlenstoffatomen von 43 oder mehr und weniger als 51 in der Fett- oder Ölzusammensetzung 0,1 bis 1,9 Massen-% beträgt.

10. Fett- oder Ölzusammensetzung gemäß mindestens einem der Ansprüche 1 bis 8, wobei ein Gehalt der Fettsäureester mit einer Gesamtanzahl an Kohlenstoffatomen von 43 oder mehr und weniger als 51 in der Fett- oder Ölzusammensetzung 0,5 bis 1,9 Massen-% beträgt.

11. Fett- oder Ölzusammensetzung gemäß mindestens einem der Ansprüche 1 bis 10, wobei ein Gehalt (ppm) an MCPD-FS in der Fett- oder Ölzusammensetzung 3 ppm oder weniger beträgt, gemessen durch ein Deutsche Gesellschaft für Fettwissenschaft (DGF) Standardverfahren C-III 18(09).

12. Verfahren zur Herstellung einer Fett- oder Ölzusammensetzung, umfassend: 20 Massen-% oder mehr Diacylglycerole und 10 Massen-% oder weniger Monoacylglycerole in Bezug auf einen Gesamtgehalt an Triacylglycerolen, Diacylglycerolen, Monoacylglycerolen und freien Fettsäuren in der Fett- oder Ölzusammensetzung; und 2 Massen-% oder weniger Fettsäureester mit einer Gesamtanzahl an Kohlenstoffatomen von 43 oder mehr und weniger als 51 in der Fett- oder Ölzusammensetzung, wobei das Herstellungsverfahren die folgenden Schritte (1), (2), (3) und (4) umfasst:
(1) Hydrolysieren eines Ausgangsmaterialfetts oder -öls, ausgewählt aus einem oder mehr Vertretern aus Sonnenblumenöl, Rapsöl und Leinsamenöl, mit einer Öl- und Fetthydrolase;
(2) Kühlen des hydrolysierten Reaktionsprodukts so, dass ein Feststoff ausgefällt wird, gefolgt vom Entfernen des Feststoffs durch Fraktionieren, um so eine fraktionierte Fettsäure herzustellen;
(3) Durchführen einer Veresterungsreaktion der resultierenden fraktionierten Fettsäure mit Glycerin, so dass eine Fett- oder Ölzusammensetzung, die 20 Massen-% oder mehr Diacylglycerole in Bezug auf ein Gesamtgehalt an Triacylglycerolen, Diacylglycerolen, Monoacylglycerolen und freien Fettsäuren in der Fett- oder Ölzusammensetzung umfasst, hergestellt wird; und
(4) in Kontakt bringen der resultierenden Fett- oder Ölzusammensetzung mit einem Adsorptionsmittel.

13. Herstellungsverfahren gemäß Anspruch 12, bei dem ein Gehalt (ppm) an MCPD-FS in der resultierenden Fett- oder Ölzusammensetzung 3 ppm oder weniger beträgt, gemessen durch ein Deutsche Gesellschaft für Fettwissenschaft (DGF) Standardverfahren C-III 18(09).

14. Herstellungsverfahren gemäß Anspruch 12 oder 13, bei dem ein Gehalt an gesättigten Fettsäuren in Fettsäurebestandteilen eines Fetts oder Öls in der resultierenden Fett- oder Ölzusammensetzung 8 Massen-% oder weniger beträgt.

15. Herstellungsverfahren gemäß mindestens einem der Ansprüche 12 bis 14, bei dem ein Gehalt an α-Linolensäure in Fettsäurebestandteilen eines Fetts oder Öls in der resultierenden Fett- oder Ölzusammensetzung 10 Massen-% oder weniger beträgt.

## Revendications

1. Composition de matière grasse ou d'huile, comprenant :
20% en masse ou plus de diacylglycérols et 10% en masse ou moins de monoacylglycérols par rapport à une teneur totale de triacylglycérols, de diacylglycérols, de monoacylglycérols et d'acides gras libres dans la composition de matière grasse ou d'huile ; et
2 % en masse ou moins d'esters d'acides gras ayant un total d'atomes de carbone de 43 ou plus et inférieur à 51 dans la composition de matière grasse ou d'huile,
dans laquelle la composition de matière grasse ou d'huile peut être obtenue par un procédé de production comprenant les étapes (1), (2), (3) et (4) suivantes consistant à:
(1) hydrolyser une matière première de matière grasse ou d'huile sélectionnée à partir d'une ou de plusieurs parmi l'huile de tournesol, l'huile de colza et l'huile de lin, avec une hydrolase d'huile et de matière grasse ;
(2) refroidir le produit réactionnel hydrolysé pour précipiter un solide, puis éliminer le solide par un fractionnement, afin de préparer un acide gras fractionné ;
(3) soumettre l'acide gras fractionné résultant et de la glycérine à une réaction d'estérification pour préparer une composition de matière grasse ou d'huile comprenant 20% en masse ou plus de diacylglycérols par rapport à une teneur totale de triacylglycérols, de diacylglycérols, de monoacylglycérols et d'acides gras libres dans la composition de matière grasse ou d'huile ; et
(4) mettre la composition de matière grasse ou d'huile résultante en contact avec un adsorbant.

2. Composition de matière grasse ou d'huile selon la revendication 1, dans laquelle une teneur en acide α-linolénique dans des acides gras constitutifs d'une matière grasse ou d'une huile dans la composition de matière grasse ou d'huile est de 10% en masse ou moins.

3. Composition de matière grasse ou d'huile selon la revendication 1, dans laquelle une teneur en acide α-linolénique dans des acides gras constitutifs d'une matière grasse ou d'une huile dans la composition de matière grasse ou d'huile est de 0 à 5 % en masse.

4. Composition de matière grasse ou d'huile selon la revendication 1, dans laquelle une teneur en acide α-linolénique dans des acides gras constitutifs d'une matière grasse ou d'une huile dans la composition de matière grasse ou d'huile est de 0 à 2 % en masse.

5. Composition de matière grasse ou d'huile selon l'une quelconque des revendications 1 à 4, dans laquelle une teneur en acides gras saturés dans des acides gras constitutifs d'une matière grasse ou d'une huile dans la composition de matière grasse ou d'huile est de 8 % en masse ou moins.

6. Composition de matière grasse ou d'huile selon l'une quelconque des revendications 1 à 4, dans laquelle une teneur en acides gras saturés dans des acides gras constitutifs d'une matière grasse ou d'une huile dans la composition de matière grasse ou d'huile est de 1 à 6,5 % en masse.

7. Composition de matière grasse ou d'huile selon l'une quelconque des revendications 1 à 6, dans laquelle une teneur en acides linoléique dans des acides gras constitutifs d'une matière grasse ou d'une huile dans la composition de matière grasse ou d'huile est de 20 à 60 % en masse.

8. Composition de matière grasse ou d'huile selon l'une quelconque des revendications 1 à 6, dans laquelle une teneur en acide linoléique dans des acides gras constitutifs d'une matière grasse ou d'une huile dans la composition de matière grasse ou d'huile est de 30 à 55 % en masse.

9. Composition de matière grasse ou d'huile selon l'une quelconque des revendications 1 à 8, dans laquelle une teneur en esters d'acides gras ayant un total d'atomes de carbone de 43 ou plus et inférieur à 51 dans la composition de matière grasse ou d'huile est de 0,1 à 1,9 % en masse.

10. Composition de matière grasse ou d'huile selon l'une quelconque des revendications 1 à 8, dans laquelle une teneur en esters d'acides gras ayant un total d'atomes de carbone de 43 ou plus et inférieur à 51 dans la composition de matière grasse ou d'huile est de 0,5 à 1,9 % en masse.

11. Composition de matière grasse ou d'huile selon l'une quelconque des revendications 1 à 10, dans laquelle une teneur (ppm) de MCPD-FS dans la composition de matière grasse ou d'huile est de 3 ppm ou moins, qui est mésurée par une méthode C-III 18(09) selon la norme Deutsche Gesellschaft für Fettwissenschaft (DGF).

12. Procédé de production d'une composition de matière grasse ou d'huile comprenant 20 % en masse ou plus de diacylglycérols et 10 % en masse ou moins de monoacylglycérols par rapport à une teneur totale de triacylglycérols, de diacylglycérols, de monoacylglycérols et d'acides gras libres dans la composition de matière grasse ou d'huile ; et 2 % en masse ou moins d'esters d'acides gras ayant un total d'atomes de carbone de 43 ou plus et inférieur à 51 dans la composition de matière grasse ou d'huile, le procédé de production comprenant les étapes (1), (2), (3) et (4) suivantes consistant à :
(1) hydrolyser une matière première de matière grasse ou d'huile sélectionnée à partir d'une ou de plusieurs parmi l'huile de tournesol, l'huile de colza et l'huile de lin, avec une hydrolase d'huile et de matière grasse ;
(2) refroidir le produit réactionnel hydrolysé pour précipiter un solide, puis éliminer le solide par un fractionnement, afin de préparer un acide gras fractionné ;
(3) soumettre l'acide gras fractionné résultant et de la glycérine à une réaction d'estérification pour préparer une composition de matière grasse ou d'huile comprenant 20% en masse ou plus de diacylglycérols par rapport à une teneur totale de triacylglycérols, de diacylglycérols, de monoacylglycérols et d'acides gras libres dans la composition de matière grasse ou d'huile ; et
(4) mettre la composition de matière grasse ou d'huile résultante en contact avec un adsorbant.

13. Procédé de production selon la revendication 12, dans lequel une teneur (ppm) de MCPD-FS dans la composition de matière grasse ou d'huile résultante est de 3 ppm ou moins, qui est mésurée par une méthode C-III 18(09) selon la norme « Deutsche Gesellschaft für Fettwissenschaft » (DGF).

14. Procédé de production selon la revendication 12 ou 13, dans lequel une teneur en acides gras saturés dans les acides gras constitutifs d'une matière grasse ou d'une huile dans la composition de matière grasse ou d'huile résultante est de 8 % en masse ou moins.

15. Procédé de production selon l'une quelconque des revendications 12 à 14, dans lequel une teneur en acide α-linolénique dans les acides gras constitutifs d'une matière grasse ou d'une huile dans la composition de matière grasse ou d'huile résultante est de 10 % en masse ou moins.
